# EUROPEAN PATENT SPECIFICATION

(11) **EP 1 529 017 B1**
(45) Date of publication and mention of the grant of the patent: **02.08.2006**
(21) Application number: 03710246.4
(22) Date of filing: 05.03.2003
(51) Int. Cl.: C01G 49/06, C01G 49/08, C01G 51/00, G11B 5/706, G11B 5/738

(54) **IRON OXIDE POWDER FOR UNDERCOAT LAYER OF COAT-TYPE MAGNETIC RECORDING MEDIUM HAVING MULTILAYER STRUCTURE AND A PROCESS OF PRODUCING THE SAME**
EISENOXIDPULVER FÜR DIE UNTERSCHICHT EINES MAGNETISCHEN MEHRSCHICHT-AUFZEICHNUNGS-TRÄGERS UND ZUGEHÖRIGES HERSTELLUNGSVERFAHREN
POUDRE D'OXYDE DE FER POUR SOUS-COUCHE D'UN SUPPORT D'ENREGISTREMENT MAGNETIQUE A STRUCTURE MULTICOUCHE ET PROCEDE DE PRODUCTION DE CETTE POUDRE

(30) Priority: 23.08.2002 JP 2002243346
(43) Date of publication of application: 11.05.2005
(73) Proprietor: Kanto Denka Kogyo CO., LTD., Chiyoda-ku, Tokyo 100-0005 (JP)
(72) Inventor: IIZUKA, Shinji c/o KANTO DENKA KOGYO CO., LTD., 425 Kanai, Shibukawa-shi, Gunma 377-0027 (JP); NAGATSUKA, Tamio c/o KANTO DENKA KOGYO CO., LTD., 425 Kanai, Shibukawa-shi, Gunma 377-0027 (JP); SAITO Takashi c/o KANTO DENKA KOGYO CO., LTD., 425 Kanai, Shibukawa-shi, Gunma 377-0027 (JP); MORIYA, Yosimi c/o KANTO DENKA KOGYO CO., LTD., 425 Kanai, Shibukawa-shi, Gunma 377-0027 (JP); HAYASHI, Masatomo c/o KANTO DENKA KOGYO CO., LTD., 425 Kanai, Shibukawa-shi, Gunma 377-0027 (JP)
(74) Representative: Forstmeyer, Dietmar
(86) International application number: PCT/JP2003/002582
(87) International publication number: WO 2004/018365

(56) References cited:
- US-A- 5 750 250
- US-A- 6 120 898
- US-B1- 6 207 253
- US-B1- 6 207 279
- US-B1- 6 391 450
- DATABASE WPI Derwent Publications Ltd., London, GB; AN 1991-210617 XP002246093 "Preparation of high purity haematite particles - including washing haematite particles with acid solution to remove sodium ions and with ion-exchanged water to remove sulphate ions" & JP 03 131524 A (TODA KOGYO CORP), 5 June 1991 (1991-06-05)

## Description

### Technical Field

This invention relates to an iron oxide powder which can be used to form an undercoat layer of a coat-type magnetic recording medium having a multilayer structure.

In recent years, magnetic recording and reading equipment including video tapes and data backup tapes has shown advancement in recording time length and recording capacity and reduction of size and weight. These tendencies have boosted the demands for higher performance of magnetic recording media such as magnetic tapes and magnetic discs, i.e., higher-density recording capabilities, particularly higher outputs and lower noises in short wavelength recording.

To improve these performance characteristics of magnetic recording media, studies on metallic powders with enhanced performance for use in the magnetic layer of magnetic recording media and on reduction of the magnetic layer thickness have been advancing. Along these lines, studies on the metallic powders have been directed to reduction of particle size and increase in coercive force Hc. With reference to particle size reduction, in particular, the problem is that such ultrafine particles as have a length of 0.2 µm or smaller and a width of 0.025 µm or smaller are susceptible to deterioration and can cause a reduction particularly in saturation magnetization. Therefore, maintenance of initial characteristics (long-term stability) is one of the demands for magnetic recording media. In other words, it has been keenly demanded to minimize deterioration of the metallic powder used in magnetic recording media.

In order to achieve high-density recording, especially high outputs and low noises in the short wavelength range, multilayered coat-type magnetic media having an undercoat layer comprising non-magnetic powder dispersed in a binder resin between the magnetic layer and substrate (base film) have been proposed and put to practical use.

The object of providing an undercoat layer between the magnetic layer and the substrate (base film) is to create a smooth surface on the substrate which will make it possible to thin and smooth the magnetic layer provided thereon thereby to achieve high output and low noise in a short recording wavelength range. With the decreasing thickness of magnetic recording media, it has been demanded that the undercoat layer contribute to the strength of the magnetic recording media, help the magnetic layer formed thereon manifest its characteristics to the full, have a low light transmittance so as to ensure tape end detection based on transmitted light detection, and have a low specific resistance for error rate reduction.

In order to obtain non-magnetic powder with a reduced light transmittance and a reduced specific resistance for use in the undercoat layer, it has been proposed to dope iron oxide with Mn (see JP-A-8-259237 and JP-A-2000-20943). Attempts to improve storage stability of magnetic recording media by reducing soluble ion contents of non-magnetic powder forming the undercoat layer have been reported (see JP-A-9-170003, JP-A-10-177714, JP-A-10-198948, JP-A-2000-123354, and JP-A-2000-327335).

The most awaited powder for forming an undercoat layer of magnetic recording media is one capable of forming an undercoat layer with a smooth surface and strength, having a low light transmittance and a low specific resistance, and capable of suppressing deterioration of metallic powders for magnetic recording used in the magnetic layer. Such a powder has not yet been developed.

That is, JP-A-9-170003 and JP-A-2000-327335 *supra* disclose a non-magnetic powder, which is to be used in a non-magnetic undercoat layer, having a soluble sodium content of 0 to 300 ppm and a soluble sulfate ion content of 0 to 150 ppm. Even if soluble sodium of a non-magnetic powder could be reduced to about 45 ppm by the processes disclosed, the substantial sodium content present inside the non-magnetic powder is about 300 ppm, which gradually becomes soluble sodium and precipitates with time. Therefore, the powder disclosed cannot be seen as having sufficient storage stability. The acicular hematite powder disclosed in JP-A-2000-123354 *supra* has a total sodium content of 50 ppm or less. However, the proposed process for producing the powder is too laborious and costly to materialize on an industrial scale, comprising dehydrating acicular goethite particles to obtain acicular hematite particles, reducing the hematite particles in an reducing atmosphere at 250 to 600°C to obtain acicular magnetite particles, washing with water and drying the particles, and oxidizing the particles in an oxidizing atmosphere at 650 to 850°C to obtain high-density acicular hematite particles, which need washing with water and drying. Besides, it is difficult to form an undercoat layer having a low light transmittance and a low specific resistance by using hematite particles or aluminum hydroxide- or aluminum oxide-coated hematite particles because hematite particles are dark reddish brown.

### Disclosure of the Invention

An object of the present invention is to provide a powder for forming an undercoat layer of a coat-type magnetic recording medium having a multilayer structure which has excellent dispersibility, capability of forming a smooth and strong undercoat layer, a low light transmittance and a low specific resistance, and capability of suppressing deterioration of metallic powder for magnetic recording in a magnetic layer, and a process of producing the powder.

The above object is accomplished by an iron oxide powder for an undercoat layer of a coat-type magnetic recording medium having a multilayer structure which comprises cobalt-doped iron oxide particles having an average length of 0.02 to 0.3 µm, an aspect ratio (length to width ratio) of 2 to 13 and a BET specific surface area of 40 to 100 m²/g, containing a cobalt compound in an amount of 0.2 to 10 atom% in terms of cobalt based on total iron, and having a pH of 6 to 8, a soluble cation content of 50 ppm or less and a soluble anion content of 50 ppm or less.

The above object is also accomplished by a process of producing an iron oxide powder for an undercoat layer of a coat-type magnetic recording medium having a multilayer structure, which process comprises the steps of adding to an aqueous solution of a ferrous salt an equivalent or more amount of an alkali to prepare a ferrous hydroxide colloid liquid, bubbling an oxygen-containing gas through the colloid liquid to prepare a goethite slurry, filtering the slurry, washing the filter cake with water, drying the cake, and dehydrating the resulting goethite powder by heating at 300 to 600°C in a non-reducing gas stream, wherein the ferrous salt is ferrous chloride, the alkali is ammonia containing carbonate ions, and a cobalt compound is added in any of the steps involved to prepare the goethite slurry or after preparation of the goethite slurry to produce cobalt-doped iron oxide particles having an average length of 0.02 to 0.3 µm, an aspect ratio (length to width ratio) of 2 to 13 and a BET specific surface area of 40 to 100 m²/g, containing a cobalt compound in an amount of 0.2 to 10 atom% in terms of cobalt based on total iron, and having a pH of 6 to 8, a soluble cation content of 50 ppm or less and a soluble anion content of 50 ppm or less.

### Best Mode for Carrying out the Invention

The cobalt-doped iron oxide particles, which constitute the iron oxide powder for undercoat layer formation according to the present invention, are preferably cobalt-doped α-iron oxide particles. The particles are acicular particles having an aspect ratio (length to width ratio) of 2 to 13, preferably 4 to 11. With an aspect ratio smaller than 2, the particles have reduced structural viscosity in a disperse system, which is generally attributed to the particle shape, and are difficult to harmonize with a magnetic coating used to form an upper magnetic layer. Further, particles having an aspect ratio smaller than 2 undergo little effect of compression in calendering after coating and drying for creating a mirror finish. If the aspect ratio exceeds 13, such elongated particles are easily entangled with each other or broken when dispersed only to give a coating of poor particle size distribution.

The cobalt-doped iron oxide powder internally contains 0.2 to 10 atom%, preferably 0.5 to 8.5 atom%, in terms of cobalt, of a cobalt compound based on the total iron. With a cobalt content less than 0.2 atom%, the powder fails to exhibit required optical absorption, namely, has a high light transmittance. With a cobalt content more than 10 atom%, the powder shows an increased coercive force, an increased saturation magnetization, and an increased residual magnetization. An undercoat layer formed of such particles will participate in magnetic recording and accelerates self-demagnetization loss or causes noise.

The cobalt compound includes cobalt chloride, cobalt sulfate, and cobalt nitrate.

The cobalt-doped iron oxide particles have an average length of 0.02 to 0.3 µm, preferably 0.05 to 0.25 µm. Particles with an average particle length smaller than 0.02 µm are difficult to disperse in a vehicle due to the increased force of aggregation. Particles longer than 0.3 µm are too large to assure surface smoothness of the undercoat layer.

The cobalt-doped iron oxide particles have a BET specific surface area of 40 to 100 m²/g, preferably 45 to 80 m²/g. Particles having a BET specific surface area less than 40 m²/g are so large as to spoil the surface smoothness of the undercoat layer. Particles with a BET specific surface area more than 100 m²/g are difficult to disperse in a vehicle, resulting in a failure to provide a smooth surface.

The cobalt-doped iron oxide powder has a soluble cation content of 50 ppm or less, preferably 5 to 20 ppm. If the soluble cation content exceeds 50 ppm, the particles will gradually corrode metallic magnetic powder mainly comprising iron which is present in the magnetic layer formed on the undercoat layer. The corrosion accelerates deterioration of magnetic characteristics. The excessive soluble cation content also reacts with the dispersant, etc. incorporated into the recording medium, which leads to head contamination and an increase of error rate. Further, the soluble cation interferes with resin adsorption in a vehicle, which can impair dispersibility. While the lower limit of the soluble cation content is not particularly limited, an attempt to reduce to less than 5 ppm results in a high cost in view of productivity, which is industrially disadvantageous.

The cobalt-doped iron oxide powder has a soluble anion content of 50 ppm or less, preferably 5 to 20 ppm. If the soluble anion content exceeds 50 ppm, the powder will gradually corrode metallic magnetic powder mainly comprising iron in the magnetic layer on the undercoat layer. The corrosion not only accelerates deterioration of magnetic characteristics but also leads to corrosion of the head, i.e., reduction of the head life. Further, the soluble anion interferes with binder resin adsorption in a vehicle, which can impair dispersibility. While the lower limit of the soluble anion content is not particularly limited, an attempt to reduce to less than 5 ppm results in a high cost in view of productivity, which is industrially disadvantageous.

The pH of the cobalt-doped iron oxide powder is 6 to 8, preferably 6.5 to 8. In a pH range lower than 6 or higher than 8, soluble ions that decide the pH gradually corrode the metallic magnetic powder of the magnetic layer which mainly comprises iron to deteriorate the magnetic characteristics. Moreover, the soluble ions contaminate the head, resulting in output reduction.

It is preferred for the cobalt-doped iron oxide powder to contain 0.5 to 10 atom%, particularly 5 to 8 atom%, in terms of aluminum based on the total iron, of an aluminum compound and/or 0.1 to 5 atom%, particularly 2 to 4 atom%, in terms of silicon based on the total iron, of a silicon compound. Incorporation of at least one of an aluminum compound and a silicon compound is effective not only to prevent particle deformation in dehydrating but to make the particles more compatible with a binder resin in dispersing in a vehicle thereby to improve dispersibility of the particles. Where an aluminum compound and a silicon compound are used in combination, the total of the aluminum content and the silicon content is preferably 0.6 to 15 atom%, still preferably 7 to 12 atom%, based on the total iron.

The aluminum compound includes aluminum salts, such as aluminum chloride, aluminum nitrate, aluminum acetate, and aluminum sulfate; alkali metal aluminates, such as sodium aluminate; alumina sol; and aluminum hydroxide. Taking soluble ions' remaining into consideration, aluminum chloride, aluminum nitrate, aluminum acetate, alumina sol, and aluminum hydroxide are preferred.

The silicon compound includes sodium silicate, water glass, and silica sol.

The iron oxide powder for forming an undercoat layer which comprises the above-described cobalt-doped iron oxide powder can be produced by heat dehydrating a cobalt-doped goethite powder at a temperature of 300 to 600°C, preferably 450 to 550°C, in a non-reducing gas stream, such as an air or nitrogen stream. The cobalt-doped goethite powder used in the process is prepared through processes A, B or C described below.

### Process A:

To an aqueous ferrous chloride solution is added an equivalent or more amount of carbonate ion-containing aqueous ammonia to prepare a suspension containing colloidal ferrous hydroxide. An oxygen-containing gas is blown into the suspension at a pH 9 or higher at a temperature of 70°C or lower to produce a goethite slurry. In this process, a cobalt-doped goethite slurry is prepared by previously mixing the ferrous chloride with a cobalt compound, e.g., cobalt chloride. The resulting slurry is filtered, and the filter cake is washed with water and dried (100 to 200°C, 8 to 20 hours) to obtain a cobalt-doped goethite powder.

### Process B:

To an aqueous ferrous chloride solution is added an equivalent or more amount of carbonate ion-containing aqueous ammonia to prepare a suspension containing colloidal ferrous hydroxide. An oxygen-containing gas is blown into the suspension at a pH 9 or higher at a temperature of 70°C or lower to produce goethite. In this process, a cobalt-doped goethite slurry is prepared by adding a solution of a cobalt compound, e.g., cobalt chloride, to the suspension in the course of the oxidation. The resulting cobalt-doped goethite slurry is filtered, and the filter cake is washed with water and dried (100 to 200°C, 8 to 20 hours) to obtain a cobalt-doped goethite powder.

### Process C:

To an aqueous solution of ferrous chloride is added an equivalent or more amount of carbonate ion-containing aqueous ammonia to prepare a suspension containing colloidal ferrous hydroxide. An oxygen-containing gas is blown into the suspension at a pH 9 or higher at a temperature of 70°C or lower to prepare a goethite slurry. A cobalt compound, e.g., cobalt chloride, is added to the resulting goethite slurry and adsorbed onto goethite particles by neutralization reaction to obtain a slurry of goethite particles having cobalt hydroxide adsorbed thereon. The resulting slurry is filtered, and the filter cake is washed with water and dried (100 to 200°C, 8 to 20 hours) to obtain a cobalt-doped goethite powder.

The above-recited aluminum compound and/or silicon compound can be added to the system under goethite forming reaction thereby to incorporate aluminum and/or silicon into the cobalt-doped iron oxide particles. During the goethite forming reaction, different elements usually added for regulating the dimensional parameters such as particle length and width, for example manganese and phosphorus, may also be added. The cobalt-doped goethite powder obtained by these processes usually has a soluble cation (the total of sodium ion and ammonium ion) content of 500 to 1800 ppm, a soluble anion (chloride ion) content of 5 to 500 ppm, and a BET specific surface area of about 60 to 250 m²/g.

The heat dehydration of the cobalt-doped goethite powder is preferably performed in a steam atmosphere. Since formation of pores due to dehydration is suppressed in the presence of steam, cobalt-doped iron oxide particles that are less porous and denser can be produced.

If the heating temperature is lower than 300°C, dehydration needs much time, and the resulting cobalt-doped iron oxide particles have a large number of pores and thereby a low density. Such particles have a large BET specific surface area and will be difficult to disperse in a vehicle, resulting in a failure to form an undercoat layer with a smooth surface. In addition, pyrolysis of soluble ammonium chloride does not proceed at temperatures below 300°C. The soluble ammonium chloride remaining in the resulting cobalt-doped iron oxide powder will accelerate head corrosion. If the heating temperature is higher than 600°C, the particles undergo appreciable sintering between primary particles and between agglomerated particles and become difficult to disperse in a vehicle, resulting in a failure to form an undercoat layer with a smooth surface.

An advisable heating time for dehydration is usually about 1 to 5 hours.

The most important point of the present invention resides in that iron oxide particles which are doped with cobalt exhibit excellent dispersibility in a binder resin to provide a thin smooth uniform layer having a low light transmittance and a low specific resistance as an undercoat layer on which a magnetic layer is to be formed. Also important is that, having a pH of 6 to 8 and a soluble cation content and a soluble anion content each of 50 ppm or less, the cobalt-doped iron oxide particles suppress corrosion of the iron-based magnetic powder of the magnetic layer which otherwise leads to deterioration of magnetic characteristics of the magnetic layer, head contamination which otherwise leads to a reduction in output and an increase in error rate, and head corrosion.

The factors which are considered contributory to these actions and effects include those attributed to cobalt doping, such as (1) reduction in light transmittance, (2) reduction in specific resistance, and (3) improvement in dispersibility, and those attributed to reduced soluble ion contents, such as (4) suppression of sintering between primary particles and between agglomerated particles on heating (elimination of aggregates) and (5) increased bonding properties to polar groups contained in a binder resin, which ensures excellent dispersibility in a vehicle. These factors will be verified *infra.*

The cobalt-doped goethite powder which can be used as a cobalt-doped iron oxide precursor, is prepared by the processes described *supra.* Ferrous chloride and ammonia being used as main starting materials in these processes, the produced cobalt-doped goethite powder contains a large quantity of ammonium chloride. The cobalt-doped goethite powder ought to get rid of ammonium chloride, being water soluble, by thoroughly washing with water. However, the powder has so poor washing efficiency due to its low crystallinity that mere washing with water by means of a filter, such as a filter press, allows soluble ammonium chloride to remain in the resulting powder. This ammonium chloride is thermally labile and undergoes pyrolysis at 250°C or higher as shown below.

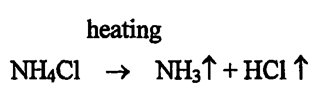

In the present invention, the soluble ammonium chloride can be expelled from the system by heat dehydrating the cobalt-doped goethite powder at 300 to 600°C in a non-reducing gas stream thereby to obtain a cobalt-doped iron oxide powder free of soluble ammonium chloride. The effect of soluble ammonium chloride removal can be enhanced by carrying out the heat dehydration treatment in a steam atmosphere.

The present invention will now be illustrated in greater detail with reference to Examples in view of Comparative Examples, but it should be understood that the present invention is not construed as being limited thereto.

The characteristics of iron oxide powders for undercoat layer formation, of undercoat layers, and of magnetic tapes shown in Examples and Comparative Examples were measured as follows.
1) Average length of iron oxide particles
   A transmission electron micrograph (x30000) taken of an iron oxide powder was enlarged four times, and the length of the major axis of arbitrarily selected 200 particles was measured to obtain an average length of the particles.
2) BET specific surface area of iron oxide particles
   Measured by the BET method with Tetrasorb 4-Sample Automatic Surface Area Analyzer 4SU2, supplied by Yuasa-Ironics Co., Ltd.
3) Composition of iron oxide powder
   Determined by X-ray fluorescence analysis.
4) pH of iron oxide powder
   An iron oxide powder sample weighing 5 g was put into a 100 ml Teflon® beaker. Pure water measuring 50 ml was added and boiled for 5 minutes. The beaker was sealed, and the contents were allowed to cool to room temperature. Pure water was added to compensate for the evaporation loss. The mixture was filtered through No. 5C filter paper. The pH of the filtrate was measured with a pH meter HM-7E, supplied by Toa Electronics Ltd.
5) Soluble ion contents
   The contents of soluble ions, i.e., soluble ammonium, sodium, chloride, and sulfate ions, of the filtrate as prepared in the measurement (4) (measurement of pH of iron oxide powder) were measured. The soluble sodium ion content was measured by atomic absorption spectrometry with Z-8000, supplied by Hitachi, Ltd. The soluble ammonium ion content, the soluble chloride ion content, and the soluble sulfate ion content were measured by ion chromatography.
6) Specific resistance of iron oxide powder
   An iron oxide powder was press molded into a disc of 13 mm in diameter and 2 mm in thickness. The disc held in between a pair of electrodes, IV voltage applied, and the resistivity was measured.
7) Viscosity of coating composition for undercoat layer
   The viscosity of a coating composition prepared was measured at 25°C with a Haake Rotovisco viscometer (model RV-12) equipped with a rotor MV-DIN at 32 rpm.
8) Gloss of undercoat layer (dispersion stability of coating composition)
   A 60° gloss of an undercoat layer was measured with Handy Glossmeter PG-1 available from Nippon Denshoku Industries Co., Ltd. Dispersion stability of a coating composition was evaluated by a change (%) from the gloss of an undercoat layer formed of a coating composition immediately after preparation and that of an undercoat layer formed of the same coating composition after standing for 60 minutes from the preparation. A smaller change of gloss indicates higher dispersion stability of the coating composition.
9) Surface roughness Ra of undercoat layer
   An average center-line roughness (Ra) of an undercoat layer was measured with Surfcom-575A.
10) Light transmittance of undercoat layer
   Light transmittance of a dried coating film applied to a 25 µm thick polyester film were measured in the visible region and at 900 nm, using the uncoated polyester film as a blank.
11) Magnetic characteristics of magnetic tape
   Magnetic characteristics of a magnetic tape prepared were measured with BHV-30 supplied by Riken Denshi Co. by applying the magnetic field up to 795.8 kA/m.
12) Corrosion of magnetic tape
   A magnetic tape was left to stand at 60°C and 90% RH for 14 days. A rate of change in saturation magnetization between before and after the standing (a change divided by the saturation magnetization before standing) was measured as a representative of changes of magnetic characteristics with time which accompany corrosion of the iron-based metallic magnetic powder of the magnetic layer.

### EXAMPLE 1

A reactor equipped with a stirrer and a gas introducing tube was purged with nitrogen gas to expel oxidizing gas. An alkali solution of 18 mol of ammonium carbonate in 401 of 1.2 mol/l aqueous ammonia was put into the reactor. A solution of 12 mol of ferrous chloride and 0.6 mol of cobalt chloride in 201 of pure water was mixed into the alkali solution to prepare a suspension. The suspension was kept at 50°C for 1 hour and then oxidized with 2.0 l/min of air for 4 hours to form a cobalt-doped goethite slurry. To the slurry were added 0.3 mol, in terms of silicon, of water glass and 0.7 mol, in terms of aluminum, of aluminum chloride, each based on the total iron, followed by stirring for 30 minutes. The reaction mixture was filtered. The filter cake was washed with water and dried in a dryer at 140°C for 10 hours to obtain about 1.1 kg of a cobalt-doped goethite cake. The resulting cake was fired at 500°C for 2 hours in an air stream to obtain about 1.0 kg of a cobalt-doped iron oxide powder.

### EXAMPLE 2

A cobalt-doped iron oxide powder was obtained in the same manner as in Example 1, except that the firing was carried out in a steam stream.

### EXAMPLE 3

A reactor equipped with a stirrer and a gas introducing tube was purged with nitrogen gas to expel oxidizing gas. Forty liters of 2.1 mol/l aqueous ammonia was put into the reactor. Four hundred liters of carbonic acid gas was dissolved in the aqueous ammonia while stirring to make an alkali solution. A solution of 12 mol of ferrous chloride in 201 of pure water was mixed into the alkali solution to prepare a suspension, which had a pH of 9.3. The suspension was kept at 50°C for 1 hour and then oxidized with 2.51/min of air for 2 hours. A solution of 0.6 mol of cobalt chloride in 5.01 of pure water was added to the reaction mixture, and oxidation was continued to oxidize the iron (II) to obtain a cobalt-doped goethite slurry. To the slurry were added 0.4 mol, in terms of silicon, of water glass and 0.7 mol, in terms of aluminum, of aluminum chloride, each based on the total iron, followed by stirring for 30 minutes. The reaction mixture was filtered. The filter cake was washed with water and dried in a dryer at 140°C for 10 hours to obtain a cobalt-doped goethite cake. The resulting cake was fired at 500°C for 2 hours in a steam stream to obtain a cobalt-doped iron oxide powder.

### EXAMPLE 4

A cobalt-doped iron oxide powder was obtained in the same manner as in Example 2, except for using 0.36 mol of cobalt chloride and 0.96 mol of aluminum chloride.

### EXAMPLE 5

A cobalt-doped iron oxide powder was obtained in the same manner as in Example 2, except for using 0.96 mol of cobalt chloride and 0.96 mol of aluminum chloride.

### EXAMPLE 6

A cobalt-doped iron oxide powder was obtained in the same manner as in Example 2, except for using 0.06 mol of cobalt chloride and 0.96 mol of aluminum chloride.

### EXAMPLE 7

A cobalt-doped iron oxide powder was obtained in the same manner as in Example 3, except that the firing was carried out at 550°C for 3 hours in a steam stream.

### EXAMPLE 8

A reactor equipped with a stirrer and a gas introducing tube was purged with nitrogen gas to expel oxidizing gas. Forty liters of 2.1 mol/l aqueous ammonia was put into the reactor. Four hundred liters of carbonic acid gas was dissolved in the aqueous ammonia while stirring to make an alkali solution. A solution of 12 mol of ferrous chloride in 201 of pure water was mixed into the alkali solution to prepare a suspension, which had a pH of 9.3. The suspension was maintained at 50°C for 1 hour and then oxidized with 2.5 l/min of air for 4 hours to oxidize the iron (II) to obtain a goethite slurry. To the slurry were added 0.6 mol, in terms of cobalt, of cobalt chloride, 0.4 mol, in terms of silicon, of water glass, and 0.7 mol, in terms of aluminum, of aluminum chloride, each based on the total iron, followed by stirring for 30 minutes. The reaction mixture was filtered. The filter cake was washed with water and dried in a dryer at 140°C for 10 hours to obtain a cobalt-doped goethite cake. The resulting cake was fired at 500°C for 2 hours in a steam stream to obtain a cobalt-doped iron oxide powder.

### COMPARATIVE EXAMPLE 1

A reactor equipped with a stirrer and a gas introducing tube was purged with nitrogen gas to expel oxidizing gas. An alkali solution of 6 mol of sodium hydroxide in 401 of a 0.45 mol/l sodium carbonate aqueous solution was put into the reactor. A solution of 12 mol of ferrous chloride in 201 of pure water was mixed into the alkali solution to prepare a suspension. The suspension was maintained at 50°C for 1 hour and then oxidized with 2.0 l/min of air for 4 hours to obtain a goethite slurry. To the slurry were added 0.3 mol, in terms of silicon, of water glass and 0.7 mol, in terms of aluminum, of aluminum chloride, each based on the total iron, followed by stirring for 30 minutes. The reaction mixture was filtered. The filter cake was washed with water and dried in a dryer at 140°C for 10 hours to obtain a goethite cake. The resulting cake was fired at 500°C for 2 hours in air stream to obtain an iron oxide powder.

### COMPARATIVE EXAMPLE 2

A reactor equipped with a stirrer and a gas introducing tube was purged with nitrogen gas to expel oxidizing gas. An alkali solution of 18 mol of ammonium carbonate in 401 of 1.2 mol/l aqueous ammonia was put into the reactor. A solution of 12 mol of ferrous sulfate in 201 of pure water was mixed into the alkali solution to prepare a suspension. The suspension was kept at 50°C for 1 hour and then oxidized with 2.01/min of air for 4 hours to obtain a goethite slurry. To the slurry were added 0.3 mol, in terms of silicon, of water glass and 0.7 mol, in terms of aluminum, of aluminum chloride, each based on the total iron, followed by stirring for 30 minutes. The reaction mixture was filtered. The filter cake was washed with water and dried in a dryer at 140°C for 10 hours to obtain a goethite cake. The resulting cake was fired at 500°C for 2 hours in air stream to obtain an iron oxide powder.

### COMPARATIVE EXAMPLE 3

A reactor equipped with a stirrer and a gas introducing tube was purged with nitrogen gas to expel oxidizing gas. An alkali solution of 6 mol of sodium hydroxide in 401 of a 0.45 mol/l aqueous solution of sodium carbonate was put into the reactor. A solution of 12 mol of ferrous chloride and 0.6 mol of cobalt chloride in 201 of pure water was mixed into the alkali solution to prepare a suspension. The suspension was kept at 50°C for 1 hour and then oxidized with 2.01/min of air for 4 hours to obtain a cobalt-doped goethite slurry. To the slurry were added 0.3 mol, in terms of silicon, of water glass and 0.7 mol, in terms of aluminum, of aluminum chloride, each based on the total iron, followed by stirring for 30 minutes. The reaction mixture was filtered. The filter cake was washed with water and dried in a dryer at 140°C for 10 hours to obtain a cobalt-doped goethite cake. The resulting cake was fired at 500°C for 2 hours in air stream to obtain a cobalt-doped iron oxide powder.

The characteristics of the iron oxide powders (cobalt-doped or non-doped) prepared in Examples 1 to 8 and Comparative Examples 1 to 3 are shown in Table 1 below.

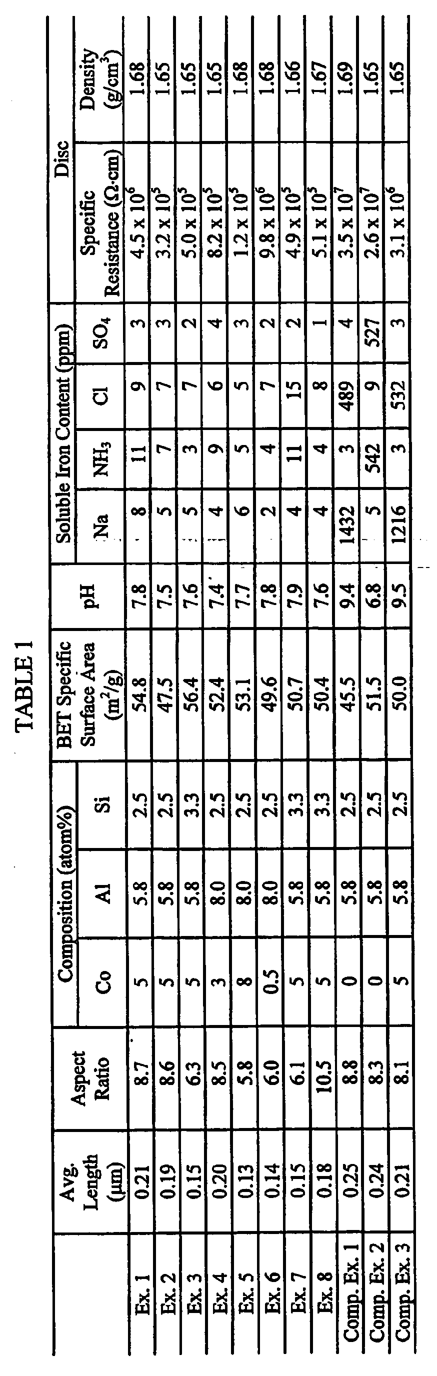

### EXAMPLES 9 TO 16 AND COMPARATIVE EXAMPLES 4 TO 6

A formulation shown below containing the iron oxide powder of Examples 1 to 8 and Comparative Examples 1 to 3 was dispersed in a sand grinder together with 500 g of glass beads having a diameter of 1.5 mm at 1200 rpm for 4 hours to prepare a coating composition for an undercoat layer. The resulting coating composition was applied to a polyethylene terephthalate base film with an applicator to a dry thickness of about 3 µm to form an undercoat layer. The characteristics of the undercoat layer are shown in Table 2.
Undercoating layer formulation:
Iron oxide powder 100 parts (by weight, hereinafter the same)
Vinyl chloride-vinyl acetate copolymer (MR-110, available from Zeon Corp.) 15 parts
Urethane resin (UR-8200, available from Toyobo Co. Ltd.) 15 parts
Toluene 135 parts
Methyl ethyl ketone 135 parts
Cyclohexanone 120 parts

**TABLE2**

| | Iron Oxide Powder | Co Content (atom%/Fe) | Coating Composition Viscosity (cP) | Coating Thickness (µm) | Ra (nm) | Gloss (%) | Dispersion Stability (Gloss Change) (%) | Light transmittance (%) | |
|---|---|---|---|---|---|---|---|---|---|
| | | | | | | | | Visible Light | 900 nm |
| Ex.9 | Ex.1 | 5 | 380 | 2.8 | 12.8 | 180 | 8.8 | 17.6 | 61.6 |
| Ex. 10 | Ex.2 | 5 | 320 | 2.8 | 8.9 | 250 | 5.7 | 12.1 | 42.1 |
| Ex.11 | Ex.3 | 5 | 290 | 2.8 | 6.3 | 220 | 5.5 | 11.3 | 38.1 |
| Ex.12 | Ex. 4 | 3 | 330 | 2.8 | 10.1 | 200 | 8.3 | 15.5 | 54.8 |
| Ex.13 | Ex. 5 | 8 | 310 | 2.8 | 5.1 | 260 | 4.7 | 3.8 | 13.7 |
| Ex. 14 | Ex.6 | 0.5 | 340 | 2.8 | 11.8 | 160 | 8.3 | 16.2 | 56.7 |
| Ex. 15 | Ex. 7 | 5 | 280 | 2.8 | 7.6 | 230 | 5.2 | 9.9 | 36.6 |
| Ex. 16 | Ex. 8 | 5 | 300 | 2.7 | 8.8 | 220 | 7.9 | 10.1 | 38.1 |
| Comp. Ex. 4 | Comp. Ex. 1 | 0 | 530 | 2.8 | 42.9 | 100 | 14.2 | 33.8 | 90.4 |
| Comp. Ex. 5 | Comp. Ex. 2 | 0 | 540 | 2.8 | 38.6 | 120 | 13.9 | 34.8 | 88.6 |
| Comp. Ex. 6 | Comp. Ex. 3 | 5 | 540 | 2.8 | 32.7 | 130 | 18.5 | 16.8 | 58.8 |

### EXAMPLES 17 TO 24 AND COMPARATIVE EXAMPLES 7 TO 9

Seventy grams of an iron-based metal magnetic powder (average particle length: 0.12 µm; Hc: 147.3 kA/m; saturation magnetization: 130 Am²/kg), a vinyl chloride-vinyl acetate copolymer resin solution (a solution of 10.5 g of a vinyl chloride-vinyl acetate copolymer having sodium sulfonate group in 31.5 g of cyclohexanone), a urethane resin solution (a solution consisting of 7.0 g of urethane, 8.1 g of toluene, and 8.1 g of methyl ethyl ketone), and 234 g of cyclohexanone were dispersed in a sand grinder containing 500 g of glass beads (diameter: 1.5mm) at 1200 rpm for 6 hours to prepare a magnetic coating composition. The coating composition was applied to the undercoat layer formed in Examples 9 to 16 and Comparative Examples 4 to 6 with an applicator to a dry thickness of about 1 µm, orientated in a magnetic field (1600 G), dried, and calendered. The coated film was slit into 8 mm widths to obtain coat-type magnetic tapes having a multilayer structure. The characteristics of the magnetic tapes are shown in Table 3 below.

**TABLE 3**

| | Undercoat Layer | Thickness of Magnetic Layer (µm) | Coercive Force Hc (kA/m) | Bm (T) | Square Ratio Br/Bm | Corrosion (%) | |
|---|---|---|---|---|---|---|---|
| | | | | | | Hc Change | Bm Change |
| Example 17 | Example 9 | 1.1 | 155.3 | 0.402 | 0.88 | 8.4 | 6.9 |
| Example 18 | Example 10 | 1.2 | 154.8 | 0.413 | 0.89 | 5.3 | 6.4 |
| Example 19 | Example 11 | 1.1 | 156.9 | 0.423 | 0.89 | 3.9 | 4.2 |
| Example 20 | Example 12 | 1.3 | 152.8 | 0.418 | 0.90 | 3.6 | 4.4 |
| Example 21 | Example 13 | 1.2 | 156.2 | 0.433 | 0.89 | 5.4 | 6.1 |
| Example 22 | Example 13 | 1.2 | 151.3 | 0.408 | 0.88 | 6.1 | 7.9 |
| Example 23 | Example 15 | 1.2 | 155.8 | 0.416 | 0.89 | 5.7 | 6.8 |
| Example 24 | Example 16 | 1.1 | 152.2 | 0.417 | 0.90 | 5.8 | 7.4 |
| Compara. Example 7 | Compara. Example 4 | 1.3 | 150.5 | 0.419 | 0.88 | 15.7 | 18.9 |
| Compara. Example 8 | Compara. Example 5 | 1.2 | 152.4 | 0.413 | 0.88 | 10.9 | 14.8 |
| Compara. Example 9 | Compara. Example 6 | 1.2 | 149.8 | 0.404 | 0.87 | 12.3 | 15.4 |

The iron oxide powder according to the present invention exhibits excellent dispersibility to give a strong thin coating film with a smooth surface, has a low light transmittance and a low specific resistance, and suppresses deterioration of magnetic metallic powder of a magnetic layer and is therefore capable of forming an undercoat layer for a high-density coat-type magnetic recording medium.

## Claims

1. Iron oxide powder for an undercoat layer of a coat-type magnetic recording medium having a multilayer structure which comprises cobalt-doped iron oxide particles having an average length of 0.02 to 0.3 µm, an aspect ratio (length to width ratio) of 2 to 13, and a BET specific surface area of 40 to 100 m²/g, containing a cobalt compound in an amount of 0.2 to 10 atom% in terms of cobalt based on total iron, and having a pH of 6 to 8, a soluble cation content of 50 ppm or less, and a soluble anion content of 50 ppm or less.

2. Iron oxide powder for an undercoat layer of a coat-type magnetic recording medium according to claim 1, wherein said cobalt-doped iron oxide particles have a soluble cation content of 5 to 20 ppm and a soluble anion content of 5 to 20 ppm.

3. Iron oxide powder for an undercoat layer of a coat-type magnetic recording medium according to claim 1 or 2, wherein said cobalt-doped iron oxide particles contain at least one of an aluminum compound in an amount of 0.5 to 10 atom% in terms of aluminum and a silicon compound in an amount of 0.1 to 5 atom% in terms of silicon, each based on the total iron.

4. Iron oxide powder for an undercoat layer of a coat-type magnetic recording medium according to claim 1, 2 or 3, wherein said cobalt-doped iron oxide particles are cobalt-doped α-iron oxide particles.

5. A process of producing an iron oxide powder for an undercoat layer of a coat-type magnetic recording medium having a multilayer structure, which process comprises the steps of adding to an aqueous solution of a ferrous salt an equivalent or more amount of an alkali to prepare a ferrous hydroxide colloid liquid, bubbling an oxygen-containing gas through the colloid liquid to prepare a goethite slurry, filtering the slurry, washing the filter cake with water, drying the cake, and dehydrating the resulting goethite powder by heating at 300 to 600°C in a non-reducing gas stream, wherein said ferrous salt is ferrous chloride, said alkali is ammonia containing carbonate ions, and a cobalt compound is added in any of the steps involved to prepare said goethite slurry or after preparation of said goethite slurry to produce cobalt-doped iron oxide particles which have an average length of 0.02 to 0.3 µm, an aspect ratio (length to width ratio) of 2 to 13, and a BET specific surface area of 40 to 100 m²/g, contain a cobalt compound in an amount of 0.2 to 10 atom% in terms of cobalt, have a pH of 6 to 8, and have a soluble cation content of 50 ppm or less and a soluble anion content of 50 ppm or less.

6. A process of producing an iron oxide powder for an undercoat layer of a coat-type magnetic recording medium according to claim 5, wherein said step of dehydrating the goethite powder by heating is carried out in a steam atmosphere.

## Patentansprüche

1. Eisenoxidpulver für eine untere Beschichtungsschicht eines magnetischen Aufzeichnungsmediums vom Beschichtungstyp, das eine Vielschichtstruktur hat, welches mit Cobalt dotierte Eisenoxidpartikel umfasst, die eine durchschnittliche Länge von 0,02 bis 0,3 µm, ein Längenverhältnis (Verhältnis Länge zu Breite) von 2 bis 13, und eine spezifische BET-Oberflächenfläche von 40 bis 100 m²/g haben, eine Cobaltverbindung in einer Menge von 0,2 bis 10 atom% in Form von Cobalt, basierend auf dem gesamten Eisen, enthalten, und einen pH von 6 bis 8, einen Gehalt an löslichem Kation von 50 ppm oder weniger, und einen Gehalt an löslichem Anion von 50 ppm oder weniger haben.

2. Eisenoxidpulver für eine untere Beschichtungsschicht eines magnetischen Aufzeichnungsmediums gemäß Anspruch 1, wobei die mit Cobalt dotierten Eisenoxidpartikel einen Gehalt an löslichem Kation von 5 bis 20 ppm und einen Gehalt an löslichem Anion von 5 bis 20 ppm haben.

3. Eisenoxidpulver für eine untere Beschichtungsschicht eines magnetischen Aufzeichnungsmediums gemäß Anspruch 1 oder 2, wobei die mit Cobalt dotierten Eisenoxidpartikel mindestens eine von einer Aluminiumverbindung in einer Menge von 0,5 bis 10 atom% in Form von Aluminium und von einer Siliciumverbindung in einer Menge von 0,1 bis 5 atom% in Form von Silicium enthalten, jeweils basierend auf dem gesamten Eisen.

4. Eisenoxidpulver für eine untere Beschichtungsschicht eines magnetischen Aufzeichnungsmediums vom Beschichtungstyp gemäß Anspruch 1, 2 oder 3, wobei die mit Cobalt dotierten Eisenoxidpartikel mit Cobalt dotierte α-Eisenoxidpartikel sind.

5. Verfahren zur Herstellung eines Eisenoxidpulvers für eine untere Beschichtungsschicht eines magnetischen Aufzeichnungsmediums vom Beschichtungstyp, das eine Vielschichtstruktur hat, wobei das Verfahren die folgenden Schritte umfasst: Zugeben einer äquivalenten oder grösseren Menge eines alkalischen Stoffes zu einer wässerigen Lösung eines Eisen(II)-salzes, um eine kolloidale Flüssigkeit von Eisen(II)-hydroxid herzustellen, Durchblasen eines Sauerstoff-enthaltenden Gases durch die kolloidale Flüssigkeit, um eine Aufschlämmung von Goethit herzustellen, Filtrieren der Aufschlämmung, Waschen des Filterkuchens mit Wasser, Trocknen des Kuchens, und Entwässern des resultierenden Goethit-Pulvers durch Heizen bei 300 bis 600°C in einem Strom aus nicht-reduzierendem Gas, wobei das Eisen (II) -salz Eisen (II) -chlorid ist, der alkalische Stoff Ammoniak, das Carbonationen enthält, ist, und eine Cobaltverbindung in irgendeinem der Schritte, die einbegriffen sind, um die Aufschlämmung von Goethit herzustellen, oder nach der Herstellung der Aufschlämmung von Goethit zugegeben wird, um mit Cobalt dotierte Eisenoxidpartikel herzustellen, welche eine durchschnittliche Länge von 0,02 bis 0,3 µm, ein Längenverhältnis (Verhältnis Länge zu Breite) von 2 bis 13, und eine spezifische BET-Oberflächenfläche von 40 bis 100 m²/g haben, eine Cobaltverbindung in einer Menge von 0,2 bis 10 atom% in Form von Cobalt enthalten, einen pH von 6 bis 8 haben, und einen Gehalt an löslichem Kation von 50 ppm oder weniger und einen Gehalt an löslichem Anion von 50 ppm oder weniger haben.

6. Verfahren zur Herstellung eines Eisenoxidpulvers für eine untere Beschichtungsschicht eines magnetischen Aufzeichnungsmediums vom Beschichtungstyp gemäß Anspruch 5, wobei der Schritt des Entwässerns des Goethit-Pulvers durch Heizen in einer Dampfatmosphäre durchgeführt wird.

## Revendications

1. Poudre d'oxyde de fer pour une sous-couche d'un support d'enregistrement magnétique à structure multicouche qui comprend des particules d'oxyde de fer dopées au cobalt ayant une longueur moyenne de 0,02 à 0,3 µm, un rapport d'aspect (rapport de la longueur à la largeur) de 2 à 13, et une surface spécifique BET de 40 à 100 m²/g, contenant un composé de cobalt dans une quantité de 0,2 à 10 % d'atomes en termes de cobalt sur la base du fer total, et ayant un pH de 6 à 8, une teneur en cations solubles de 50 ppm ou moins, et une teneur en anions solubles de 50 ppm ou moins.

2. Poudre d'oxyde de fer pour une sous-couche d'un support d'enregistrement magnétique selon la revendication 1, dans laquelle lesdites particules d'oxyde de fer dopées au cobalt ont une teneur en cations solubles de 5 à 20 ppm et une teneur en anions solubles de 5 à 20 ppm.

3. Poudre d'oxyde de fer pour une sous-couche d'un support d'enregistrement magnétique selon la revendication 1 ou 2, dans laquelle lesdites particules d'oxyde de fer dopées au cobalt contiennent au moins un d'un composé d'aluminium dans une quantité de 0,5 à 10 % d'atomes en termes d'aluminium et d'un composé de silicium dans une quantité de 0,1 à 5 % d'atomes en termes de silicium, chacun sur la base du fer total.

4. Poudre d'oxyde de fer pour une sous-couche d'un support d'enregistrement magnétique selon la revendication 1, 2 ou 3, dans laquelle lesdites particules d'oxyde de fer dopées au cobalt sont des particules d'oxyde de fer dopées au cobalt.

5. Processus de production d'une poudre d'oxyde de fer pour une sous-couche d'un support d'enregistrement magnétique à structure multicouche, lequel processus comprend les étapes d'ajout à une solution aqueuse d'un sel ferreux d'une quantité équivalente ou supérieure d'un alcali pour préparer un liquide colloïdal d'hydroxyde ferreux, d'ébullition d'un gaz contenant de l'oxygène dans le liquide colloïdal pour préparer une suspension de goethite, de filtration de la suspension, de rinçage du gâteau de filtration avec de l'eau, de séchage du gâteau et de déshydratation de la poudre de goethite obtenue en la chauffant entre 300 et 600 °C dans un effluent gazeux non réducteur, dans lequel ledit sel ferreux est du chlorure ferreux, ledit alcali est de l'ammoniaque contenant des ions carbonate, et un composé de cobalt est ajouté au cours de l'une quelconque des étapes impliquées pour préparer ladite suspension de goethite ou après la préparation de ladite suspension de goethite afin de produire des particules d'oxyde de fer dopées au cobalt ayant une longueur moyenne de 0,02 à 0,3 µm, un rapport d'aspect (rapport de la longueur à la largeur) de 2 à 13, et une surface spécifique BET de 40 à 100 m²/g, contiennent un composé de cobalt dans une quantité de 0,2 à 10 % d'atomes en termes de cobalt, ont un pH de 6 à 8 et ont une teneur en cations solubles de 50 ppm ou moins et une teneur en anions solubles de 50 ppm ou moins.

6. Processus de production d'une poudre d'oxyde de fer pour une sous-couche d'un support d'enregistrement magnétique selon la revendication 5, dans lequel ladite étape de déshydratation de la poudre de goethite par chauffage est effectuée dans une atmosphère de vapeur.
